# FASCICULE DE BREVET EUROPEEN

(11) **EP 2 841 663 B1**
(45) Date de publication et mention de la délivrance du brevet: **10.04.2019**
(21) Numéro de dépôt: 13721619.8
(22) Date de dépôt: 26.04.2013
(51) Int. Cl.: E04F 13/08, E04F 13/12, F16B 5/02

(54) **DISPOSITIF DE REVÊTEMENT D'UNE STRUCTURE DE BÂTIMENT ET STRUCTURE REVÊTUE PAR UN TEL DISPOSITIF**
VORRICHTUNG ZUR ABDECKUNG EINER GEBÄUDESTRUKTUR UND MIT EINER SOLCHEN VORRICHTUNG ABGEDECKTE STRUKTUR
DEVICE FOR COVERING A BUILDING STRUCTURE AND STRUCTURE COVERED BY SUCH A DEVICE

(30) Priorité: 27.04.2012 FR 1253947
(43) Date de publication de la demande: 04.03.2015
(73) Titulaire: Bacacier 3 S, 63800 Cournon-d'Auvergne (FR)
(72) Inventeur: VIGOUROUX, Jean-Christophe, 15430 Paulhac (FR); FAISANDIER, Julien, 63110 Beaumont (FR); BERTRAND, Joffrey, 63000 Clermont-Ferrand (FR)
(74) Mandataire: Lavoix
(86) Numéro de dépôt international: PCT/EP2013/058767
(87) Numéro de publication internationale: WO 2013/160457

(56) Documents cités:
- EP-A1- 0 481 905
- EP-A1- 0 530 101
- EP-A2- 1 233 118

## Description

L'invention a trait à un dispositif de revêtement de paroi dans une structure, du type couramment utilisé dans le bâtiment sous le nom de système de bardage. Dans ce type de système une ou plusieurs faces extérieures du bâtiment sont revêtues par des plaques ou tôles de parement, dites tôles de bardage. Ces tôles sont fixées à des éléments qui font partie de la structure porteuse du bâtiment ou qui sont rapportés sur cette structure.

Par structure, on désigne ici une ossature, par exemple réalisée par des profilés métalliques ou la paroi continue d'un mur par exemple en béton, en intérieur ou en extérieur, que cette paroi soit verticale, horizontale ou inclinée. Il s'agit, par exemple, d'un mur de séparation, d'un mur porteur ou d'un mur de maintien d'un talus. On désigne également par structure les éléments de charpente dans le toit d'un bâtiment, que ce dernier soit à usage domestique ou professionnel. Les tôles de bardage dans les dispositifs de revêtement connus de ce type sont formées de plaques ou tôles en matériau rigide, par exemple des tôles métalliques, fixées sur la structure. En variante, il peut s'agir de plaques non métalliques, par exemple en polymère, transparent ou non, ou en matériau composite que l'on qualifie également de « tôles » dans ce qui suit.

Ces tôles sont généralement de forme rectangulaire et sont pourvues d'au moins deux nervures parallèles réparties sur deux bords parallèles de la tôle. Les nervures sont adaptées pour, soit recouvrir, soit être recouvertes par une nervure similaire d'une autre tôle, lorsque les tôles sont mises côte à côte ou aboutées. Le recouvrement partiel des tôles participe à l'étanchéité du revêtement de la structure.

La fixation des tôles de bardage dans la structure s'effectue par des vis ou des rivets enfoncés dans des éléments constitutifs de la structure ou des éléments intermédiaires rapportés sur la structure, par exemple en métal ou en bois, pour aménager des intervalles dans l'épaisseur de la paroi revêtue, à des fins d'isolation, de circulation d'air ou de passage de composants fonctionnels, des câbles par exemple. C'est ainsi que dans une telle configuration, on peut ménager ou non un espace entre les tôles et la structure autorisant, par exemple, la mise en place d'un isolant et/ou le passage de conduites ou de câbles.

Cette fixation doit autant que possible être étanche pour respecter les performances d'isolation requises par la réglementation. Elle s'effectue généralement par perçage de la tôle lors de son rivetage ou de son vissage dans la structure. Au besoin, un joint est prévu au niveau de chaque rivet ou de chaque vis pour assurer l'étanchéité.

A titre d'exemple illustrant ce qui précède, EP-A-1 233 118, propose, sur une structure constituée d'un mur et de profilés solidaires de ce mur, de fixer à demeure des tôles rectangulaires, par l'intermédiaire de rivets. De même l'art antérieur est connu des documents EP 0 530 101 A1 et EP 0 481 905 A1. Ce dernier propose un dispositif de revêtement d'au moins une structure dans un bâtiment ou construction analogue, comprenant :
au moins une tôle, notamment une tôle de bardage, qui est adaptée pour revêtir au moins un secteur dans une face de cette structure, et qui présente une face interne, tournée vers ladite face de la structure, et une face externe, opposée à la face interne ;
au moins un accessoire qui est adapté pour être rapporté sur une zone de réception, ménagée sur la face externe de la tôle, qui est configuré en forme de plaque ou cassette, carrée ou rectangulaire, et qui est adapté pour former, lorsqu'il est monté sur la tôle, un élément décoratif en soi ou bien un support de fixation pour d'autres éléments accessoires, décoratifs ou utilitaires;
et des moyens de fixation adaptés pour fixer définitivement la tôle sur la structure.

Lesdits moyens de fixation comprennent des attaches qui sont adaptées pour être insérées à travers la tôle. Chacune des attaches est formée par une tige incluant en un seul organe :
un secteur d'accrochage adapté pour être fixé définitivement dans la structure à travers la tôle;
un élément d'appui, qui présente une face de serrage adaptée pour être appuyée sur la face externe de la tôle pour appliquer la face interne de la tôle contre la structure lorsque le secteur d'accrochage est fixé dans la structure à travers la tôle, de manière à fixer la tôle sur la structure de manière permanente et étanche;
et une tête, qui est séparée du secteur d'accrochage par l'élément d'appui de manière à autoriser le montage et le démontage de l'accessoire sur la zone de réception alors que la tôle est déjà fixée sur la structure par le secteur d'accrochage, sans affecter, d'une part, l'intégrité structurelle de la tôle et, d'autre part, l'intégrité et l'étanchéité de la fixation de la tôle sur la structure par le secteur d'accrochage et l'élément d'appui.

Lesdits moyens de fixation comprennent également un moyen de maintien adapté pour maintenir un organe intermédiaire des moyens de fixation, fixé à l'accessoire, ce moyen de maintien coopérant de manière amovible avec la tête de la tige des attaches.

Par ailleurs, lors de la construction, il est possible de prévoir certaines variations dans la fonction et /ou l'aspect des revêtements ainsi réalisés. On peut par exemple alterner des zones ou secteurs de tôles de couleurs différentes ou intercaler des zones transparentes pour laisser pénétrer la lumière à l'intérieur. On peut aussi, dans une certaine mesure et moyennant le recours à des pièces de raccord ou profilés de transition, alterner des zones dans lesquelles les dimensions en largeur (entre nervures) ou en longueur sont différentes. Cependant, une fois le revêtement en place, il y reste pour des périodes qui peuvent être longues, souvent de plusieurs dizaines d'années, sans qu'aucun changement substantiel dans son aspect ou ses fonctions puisse y être apporté sous peine d'en altérer l'intégrité structurelle et les qualités de protection, notamment son étanchéité ou sa résistance aux intempéries.

Il arrive donc que si les utilisateurs souhaitent apposer sur les faces du bâtiment des enseignes ou des plaques de signalisation, voire des panneaux publicitaires, ils soient contraints de réaliser de nouveaux perçages dans la ou les tôles de bardage pour réaliser les accrochages nécessaires. Il en va de même pour l'ajout d'éléments fonctionnels, tels que des points d'éclairage, supports de câbles ou autres organes. Ces perçages contribuent à dégrader l'intégrité des tôles dans lesquelles ils sont pratiqués et affectent leur longévité et leur aspect dans la durée. Ce défaut est encore aggravé lorsqu'il faut démonter des éléments ajoutés pour les remplacer par d'autres qui nécessitent de nouveaux perçages.

Ainsi les systèmes existants souffrent d'une double limitation ou défaut. D'une part ils ne permettent pas de réaliser aisément des revêtements avec des variations d'aspect ou des motifs multiples dans chaque face recouverte, indépendamment des contraintes imposées par la configuration peu diversifiée des tôles disponibles et par les besoins liés à leur recouvrement en bordure. D'autre part, ils supportent mal l'addition d'éléments amovibles susceptibles d'être modifiés ou déplacés une ou plusieurs fois pendant la vie de la construction revêtue.

Pour contourner cette problématique, le document d'art antérieur EP-A-1 233 118, mentionné plus haut propose de rapporter, sur les tôles précitées, déjà fixées à la structure, des caissons qui sont uniquement clipser sur les bords des tôles, par enclenchement de formes complémentaires. Cette solution, qui ne nécessite de percer les tôles que pour leur fixation définitive à la structure par les rivets et qui évite donc d'avoir à percer les tôles pour monter les caissons, permet de cacher les rivets précités. Cependant, du fait de la liaison par enclenchement, la résistance d'ensemble et la stabilité de cette solution restent limitées, sauf à prévoir des aménagements coûteux.

Le but de la présente invention est de proposer une solution alternative, qui, tout en étant économique et performante mécaniquement, permet de varier l'aspect visuel ou les propriétés fonctionnelles d'une tôle de revêtement d'une structure, le cas échéant après la pose, en fonction de l'évolution des besoins esthétiques ou fonctionnels, sans remettre en cause l'intégrité physique et les qualité propres de la fixation de la tôle sur la structure.

A cet effet, l'invention a pour objet un dispositif de revêtement tel que défini à la revendication 1.

Ainsi, une des idées à la base de l'invention est de tirer profit des attaches de fixation préalable de la tôle sur la structure de sorte qu'une tête de ces attaches forme, au moins en partie, des moyens de fixation d'un ou plusieurs accessoires, propres à n'affecter ni la qualité ou l'intégrité, notamment fonctionnelle, de la fixation entre la tôle et la structure ni la tôle elle-même. Cela permet de modifier l'aspect et/ou certaines fonctionnalités du revêtement d'un bâtiment, de lui conférer une modularité ou de réaliser des motifs dans des panneaux revêtus selon ce système. On comprend que ces moyens de fixation de l'accessoire sur la tôle puissent être adaptés pour réaliser une fixation amovible de l'accessoire qui peut donc être démonté ou remonté sans attenter à la solidité ou l'intégrité de la construction de base.

Grâce à la disposition appropriée d'accessoires rapportés sur les tôles, le système permet de respecter les formes ou les propriétés d'un design préétabli, spécifique de chaque projet, à partir d'éléments de base qui peuvent être les mêmes. Il permet également après la réalisation de la construction et sa mise en service d'ajouter des accessoires et de les enlever, ou de les adapter aux évolutions de l'usage et aux besoins divers qui peuvent se présenter, par exemple en matière de signalisation ou d'affichage ou de fonctionnalités diverses. Le changement du ou des accessoires sur la tôle, l'adjonction de tels éléments peuvent s'effectuer en évitant tout perçage ou intervention intrusive dans la tôle déjà en place ou dans sa structure et les moyens d'assemblage par lesquels ils sont associés au montage initial. La modification de l'aspect de la structure en est facilitée, l'intégrité, notamment l'étanchéité, de la fixation de la tôle sur la structure est dans tous les cas préservée.

Des aspects avantageux mais non obligatoires du dispositif de recouvrement selon l'invention sont spécifiés aux revendications dépendantes.

L'invention s'étend aussi à une structure de bâtiment telle que définie à la revendication 14.

L'invention sera mieux comprise et d'autres avantages de celle-ci apparaîtront plus clairement à la lecture de la description qui va suivre d'un dispositif de recouvrement réalisé conformément à plusieurs modes de réalisation de l'invention, donnée uniquement à titre d'exemple et faite en se référant aux dessins annexés dans lesquels :
- la figure 1 est une vue en perspective d'une tôle nervurée selon un mode de réalisation conforme à l'invention,
- la figure 2 est une vue en perspective, à une autre échelle, d'un accessoire décoratif perpendiculaire aux nervures sur la tôle de la figure 1,
- la figure 3 est une vue en perspective, à une autre échelle, d'un autre type d'accessoire utilisable avec la tôle de la figure 1,
- la figure 4 est une vue en perspective, à la même échelle que la figure 1, illustrant le montage amovible d'organes décoratifs de la figure 2 sur la tôle de la figure 1,
- la figure 5 est une vue en perspective, à la même échelle, illustrant la mise en place de l'accessoire de la figure 3 sur la tôle de la figure 1,
- la figure 6 est une vue partielle en perspective, similaire à la figure 5 et à la même échelle, lorsque l'accessoire est fixé sur la zone de réception de la tôle,
- la figure 7 est une vue de bout, selon la flèche VII à la figure 6,
- la figure 8 est une vue de côté, selon la flèche VIII à la figure 6,
- la figure 9 est une vue en perspective, à plus petite échelle, de plusieurs tôles de la figure 5 disposées côte à côte, en recouvrement partiel, les accessoires de la figure 3 étant fixés sur certaines zones de réception des tôles,
- la figure 10 est une vue en perspective, similaire à la figure 9 et à la même échelle, les tôles de la figure 1 étant équipées d'organes de support illustrés à la figure 2,
- la figure 11 est une vue en perspective, à la même échelle que la figure 3, d'un autre type d'accessoire formant également un support et conforme à un autre mode de réalisation de l'invention,
- la figure 12 est une vue en perspective, à une autre échelle, similaire à la figure 9, des accessoires formant support, fixés sur des tôles assemblées, recevant d'autres accessoires dont un est illustré en position de pré montage,
- la figure 13 est une vue en perspective, similaire à la figure 9 et à la même échelle, un autre type d'accessoire étant illustré monté et en position de pré montage sur des accessoires formant des organes de support conformes à un autre mode de réalisation de l'invention,
- la figure 14 est une vue partielle en perspective, à plus grande échelle, du détail XIV à la figure 5 et illustrant la mise en place de l'accessoire sur la tôle, des boulons étant représentés en position de prémontage,
- la figure 15 est une vue à plus grande échelle du détail XV à la figure 13, et
- la figure 16 est une vue en perspective d'une variante de la tôle de la figure 1.

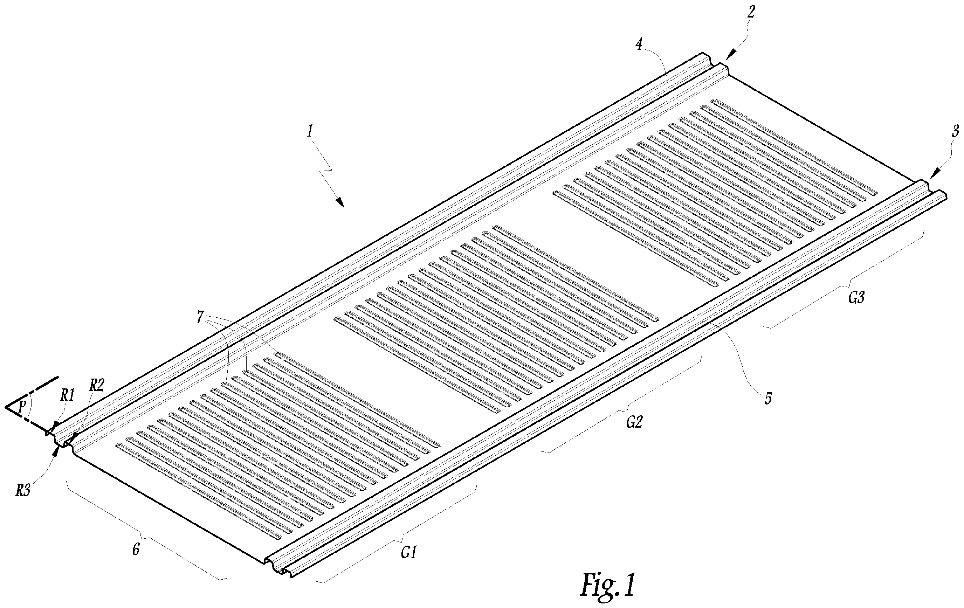

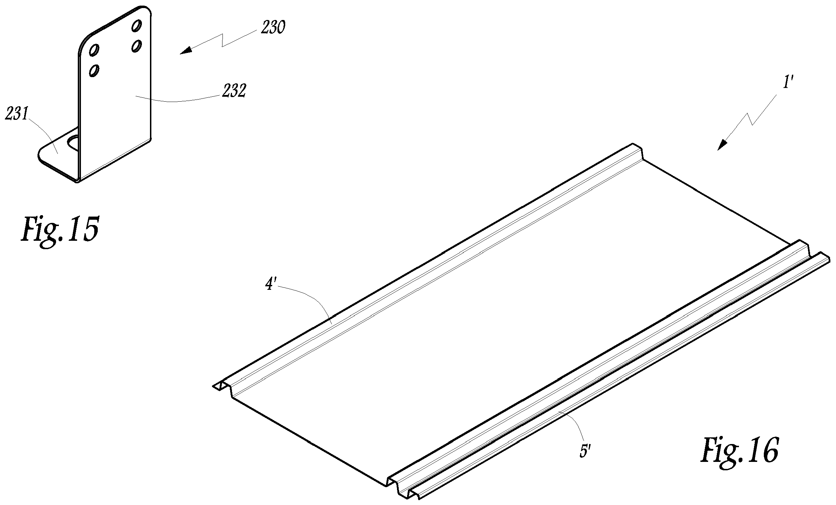

La figure 1 illustre une tôle métallique 1 de forme rectangulaire, pourvue sur deux bords 2, 3 parallèles, définissant la longueur de la tôle 1, de nervures 4 et 5 parallèles et ouvertes. Ces nervures 4, 5 ont, en section transversale, une forme en double S. En d'autres termes, elles présentent, en section transversale, deux reliefs R1, R2 situés au dessus d'un plan moyen P de la tôle 1, de part et d'autre d'un relief R3 situé en dessous du plan moyen P, en regardant la figure 1. En variante, les nervures ont une autre forme, comme montré, à titre d'exemple non limitatif, à la figure 16 sur laquelle la tôle correspondante et ses nervures sont respectivement référencées 1', 4' et 5'.

Les nervures 4, 5 de la tôle 1 sont ici constitutives des bords 2, 3. En variante, elles sont disposées selon la largeur de la tôle. Dans une autre variante, les nervures 4,5 ne définissent pas les bords de la tôle mais occupent la partie centrale de cette dernière. Dans d'autres modes de réalisation, la tôle peut être de forme carrée.

A la figure 1, l'espace séparant les deux nervures 4, 5 délimite le corps principal 6 de la tôle 1. Ce corps 6 est ici pourvu de trois groupes G1, G2, G3 de reliefs allongés 7 disposés parallèlement les uns aux autres. Ces reliefs 7 ont, en section transversale, une configuration en demi-lune. Ils s'étendent entre les nervures 4, 5, perpendiculairement à ces dernières. Dans d'autres modes de réalisation non illustrés, le corps principal 6 de la tôle 1 est plat ou pourvu de nervures parallèles aux bords 2, 3 ou encore pourvu de reliefs de géométrie complexe, par exemple en forme de demi lune, de feuille, d'étoile, de vague, ces reliefs étant régulièrement répartis ou non. En d'autres termes, la configuration et/ou le nombre de reliefs 7 répartis sur le corps 6 sont adaptés à l'aspect visuel recherché.

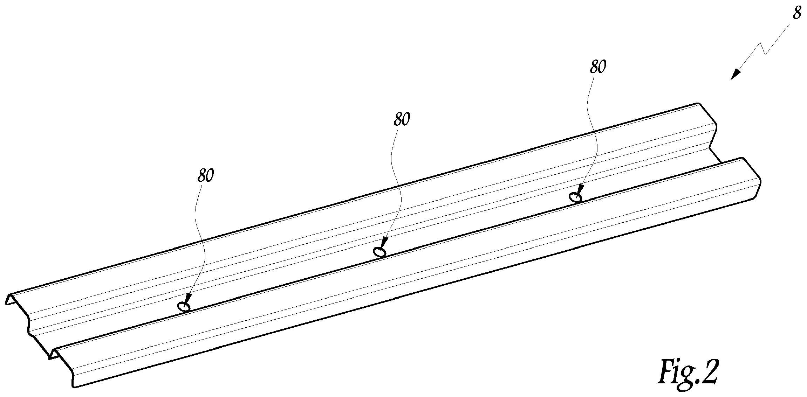

Un accessoire 8, illustré à la figure 2, est adapté pour, si besoin, être monté sur la tôle 1. Cet accessoire 8 forme un organe de support. Il se présente sous la forme d'un barreau allongé et configuré comme une nervure 4 ou 5, c'est-à-dire qu'en section transversale il a une forme en double S, étant entendu que cette section transversale peut être de configuration différente. Le barreau 8 est donc configuré comme une partie d'une nervure 4 ou 5. Il est pourvu d'au moins un orifice, ici trois orifices 80 disposés en partie médiane de l'organe, c'est-à-dire alignés selon sa plus grande dimension et ménagés dans la partie de l'accessoire 8 correspondant au relief R3 d'une nervure 4 ou 5.

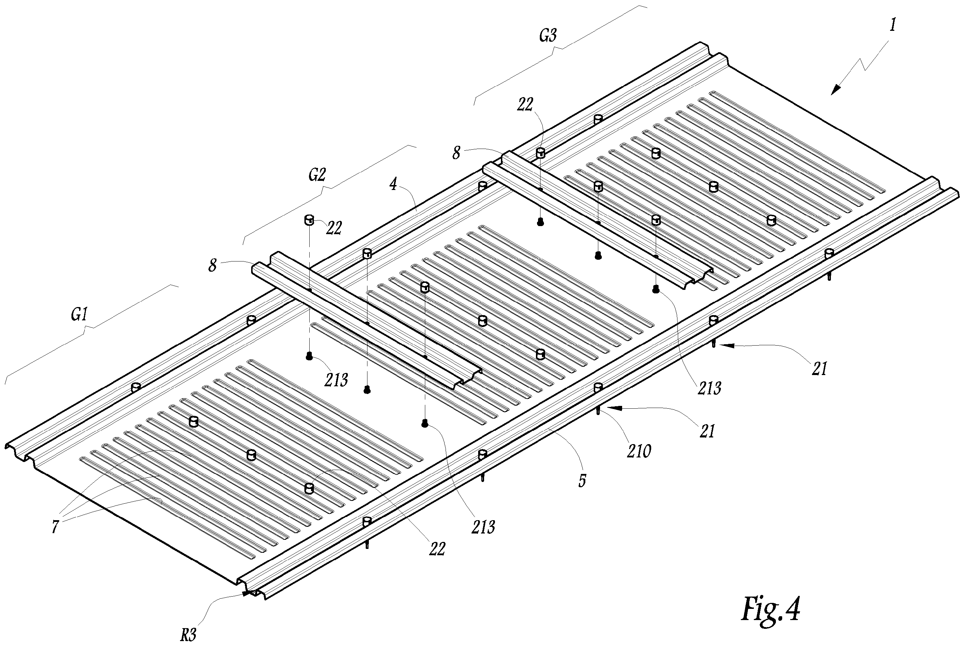

Le barreau 8 a une longueur adaptée à la largeur du corps 6 pour être monté sur le corps 6 perpendiculairement aux nervures 4 et 5 tout en étant en contact, par ses extrémités, avec les flancs des nervures 4 et 5, comme cela est visible à la figure 4.

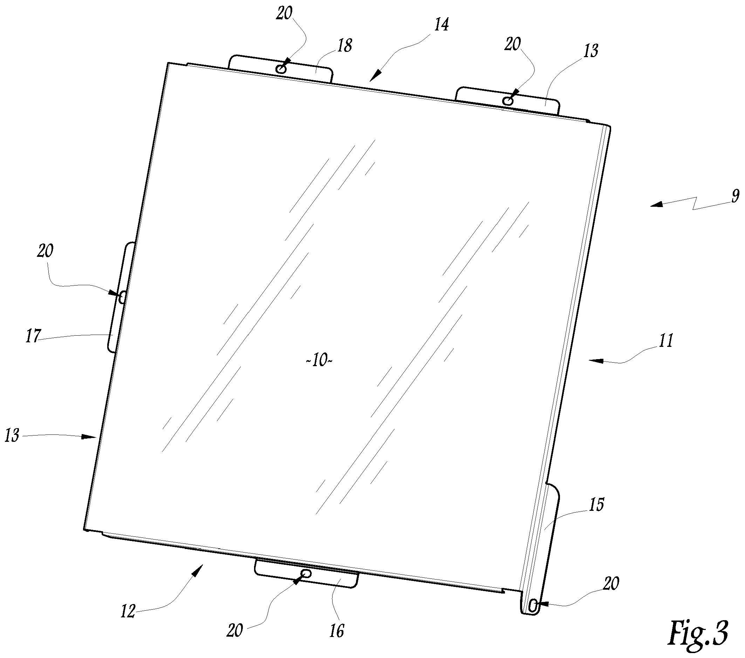

Un autre type d'accessoire 9 est représenté à la figure 3. Il est configuré en une plaque carrée, réalisée en un matériau rigide, par exemple en métal, en polymère ou en bois. Cette plaque 9, également dénommée cassette, peut être, sur au moins sa face 10 destinée à être visible lorsqu'elle est en position sur une tôle 1, colorée, teintée, imprimée ou pourvue de reliefs de différentes formes lui conférant un aspect décoratif. En variante, elle peut être d'une forme autre que carrée, par exemple rectangulaire, pentagonale, octogonale ou autre.

La plaque 9 a ses quatre cotés pliés, par exemple ici à angle droit, par rapport à sa face 10, formant ainsi quatre lèvres 11 à 14 angulées par rapport à la face supérieure 10 de la plaque 9. Les lèvres 11 à 14 sont orientées vers la tôle 1 lorsque la plaque 9 est en position sur cette dernière.

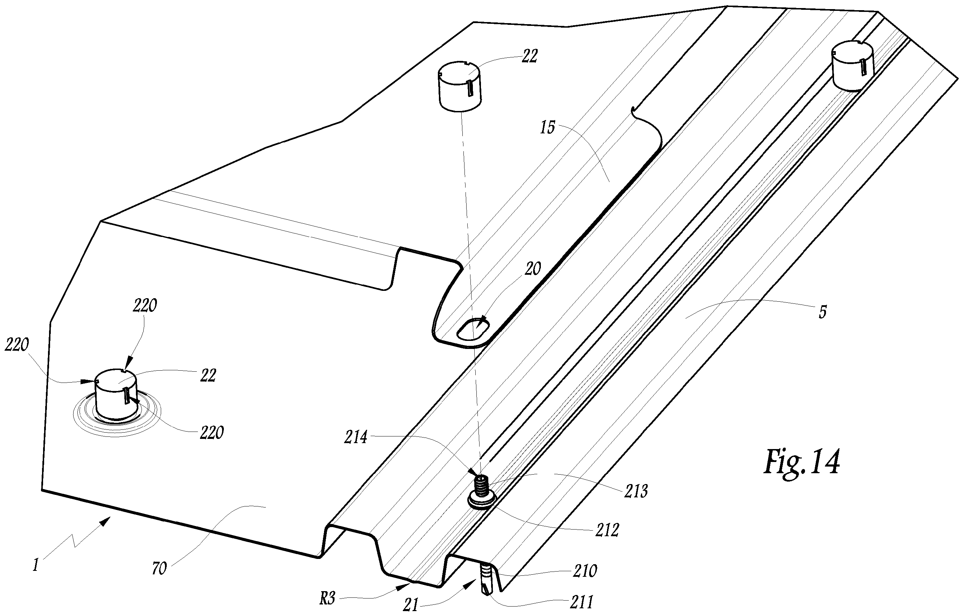

Des pattes allongées 15 à 19 s'étendent à partir des extrémités libres des lèvres 11 à 14 comme cela ressort de la figure 14, ces pattes sont chacune solidaire de la lèvre à partir de laquelle elles s'étendent. Ces pattes sont orientées vers l'extérieur de la plaque 9, parallèlement à la face 10. En d'autres termes, les pattes 15 à 19 s'étendent vers l'extérieur, perpendiculairement aux lèvres 11 à 14. Chaque patte 15 à 19 est pourvue d'au moins un orifice 20, ménagé sensiblement en position centrale pour les pattes 16 à 19 et au voisinage d'une extrémité pour la patte 15.

Les pattes 15 à 19 sont disposées différemment sur chaque lèvre. Sur la lèvre 11, la patte 15 est fixée sur une extrémité de la lèvre qui est voisine d'une extrémité de la lèvre 12. Les lèvres 12 et 13 sont équipées, en position centrale, des pattes 16, respectivement 17. Deux pattes 18 et 19 sont, quant à elles, situées au voisinage des extrémités de la lèvre 14.

Une telle disposition des pattes 15 à 19 permet, lorsqu'une plaque 9 est positionnée à côté d'une autre plaque 9 identique, d'amener en regard deux lèvres des plaques dont les pattes 15 à 19 respectives sont décalées l'une par rapport à l'autre, afin de minimiser l'espace entre les plaques voisines sans que ces dernières soient pour autant jointives. En d'autres termes, il n'y a pas de chevauchement des pattes 15 à 19 de deux plaques 9 voisines.

Dans d'autres modes de réalisation non illustrés, la disposition des pattes est différente, pour autant que cette disposition permette d'éviter un chevauchement tout en e minimisant l'espace entre deux plaques voisines.

A la figure 4 la tôle 1 est représentée avec deux barreaux 8 en position de prémontage sur la tôle 1.

Des attaches de fixation, de manière permanente et étanche, de la tôle 1 sur une face d'une structure, non illustrée pour plus de lisibilité, sont formés par des tiges filetées 21. Ces tiges 21 sont insérées dans des orifices traversant la tôle 1. Les orifices sont soit réalisés en usine soit, préférentiellement, sur site. Dans ce cas, les tiges sont avantageusement pourvues d'une pointe auto perforante.

Certaines tiges 21 sont insérées au niveau des parties R3 des nervures 4 et 5, d'autres dans le corps 6, soit entre deux groupes G1 à G3 de reliefs 7, soit entre deux reliefs 7 d'un même groupe G1 à G3. Le nombre et la répartition des moyens de fixation 21 des tôles sur la structure dépendent des critères du recouvrement entre les tôles 1, des dimensions des tôles 1 et des conditions de montage, par exemple de la résistance au vent imposée par la réglementation ou du poids des accessoires devant être supportés par la tôle 1. L'étanchéité de la fixation de la tôle 1 sur la structure est réalisée, par exemple, par un joint d'étanchéité. Afin de faciliter et d'optimiser la fixation de la tôle 1 sur la structure, la répartition des tiges 21 sur la tôle 1 est repérée par un pictogramme, une prédécoupe, un marquage en relief, à l'aide de gabarits fournis avec la tôle ou par tout autre moyen de repérage connu. Les tiges 21 sont des fixations à double fonction.

Les tiges 21 comprennent une partie adaptée pour maintenir, de manière étanche, une tôle 1 sur une structure. Cette partie comprend, comme cela apparait plus clairement à la figure 14, une portion filetée 210 située au voisinage de la pointe 211 de la tige 21. L'appui de la tôle 1 sur la structure est obtenu par une collerette 212, solidaire de la tige 21. Cette collerette 212 est placée au voisinage de l'extrémité du filetage opposée à la pointe 211. En d'autres termes, la collerette 212 matérialise la séparation entre la portion filetée 210 et la tête 213 de la tige 21. La tête 213 est pourvue d'un filetage externe et d'une empreinte terminale 214. Cette empreinte 214 permet avantageusement d'entraîner la tige 21 en rotation, plus généralement de manoeuvrer cette tige, pour fixer sa portion 210 dans la structure. Un joint d'étanchéité est avantageusement prévu sous la collerette 212 et autour de la portion filetée 210.

La tête 213 forme un moyen de fixation d'un accessoire sur la tôle 1.

A la figure 4, les tiges 21, outre la fixation de la tôle sur la structure, assurent donc également la fixation des barreaux 8 sur la tôle 1. Les barreaux ou organes de support 8 sont ainsi montés de manière amovible sur la tôle 1. Dans le mode de réalisation représenté à la figure 4, les têtes 213 de certaines tiges 21 sont insérées dans les orifices 80 des barreaux 8. Elles permettent ainsi de maintenir, de manière amovible, les barreaux 8 en appui sur la tôle 1 par l'intermédiaire d'écrous 22, vissés sur les têtes 214. Ces écrous 22 sont borgnes et utilisés comme capot de protection des têtes 213 des tiges 21 sur l'ensemble des tiges 21 qui assurent la fixation de la tôle 1 sur la structure, comme illustré à la figure 4.

Comme cela apparait notamment à la figure 14, les écrous 22 sont ici cylindriques à base circulaire. Ils sont pourvus de trois encoches de manoeuvre 220, disposées parallèlement à un axe longitudinal de chaque écrou 22. Ces rainures 220 forment des organes de manoeuvre, à l'aide d'un outil adapté, d'un écrou 22.

On a ainsi réalisé une attache, sous la forme de la tige 21, pour la fixation d'un accessoire amovible, tel que l'accessoire 8 ou 9, dans un dispositif de revêtement tel que décrit ci-dessus. Cette attache peut être décrite comme:
- comprenant un corps d'attache, ou tige, comprenant une premier secteur d'accrochage, tel que la portion filetée 210, propre à se fixer dans la structure, un élément de serrage, tel que la collerette 212, coopérant avec ce premier secteur d'accrochage et comportant une face de serrage pour appliquer une face interne de la tôle 70 contre la structure lorsque le premier secteur est fixé dans celle ci, et un deuxième secteur d'accrochage, tel que la tête 213, pour la réception d'un accessoire, tel que l'accessoire 8 ou 9, en particulier la patte 15 de ce dernier, rapporté du côté de la face externe de la tôle 70, et
- étant associée à un moyen de serrage, tel que l'écrou 22, coopérant de façon amovible avec le deuxième secteur d'accrochage pour appliquer l'accessoire contre une butée solidaire de l'élément de serrage.

Les accessoires 8 sont ainsi fixés sur la tôle 1 sans altérer l'étanchéité de la fixation de la tôle 1 sur la structure et sans modifier l'intégrité structurelle de la tôle 1, par exemple par perçage. Dans le mode de réalisation illustré à la figure 4, les moyens de fixation, amovible et étanche, respectivement du barreau 8 sur la tôle 1 et de la tôle 1 sur la structure, sont formés par un seul organe, à savoir une tige filetée 21, combinée avec l'écrou 22.

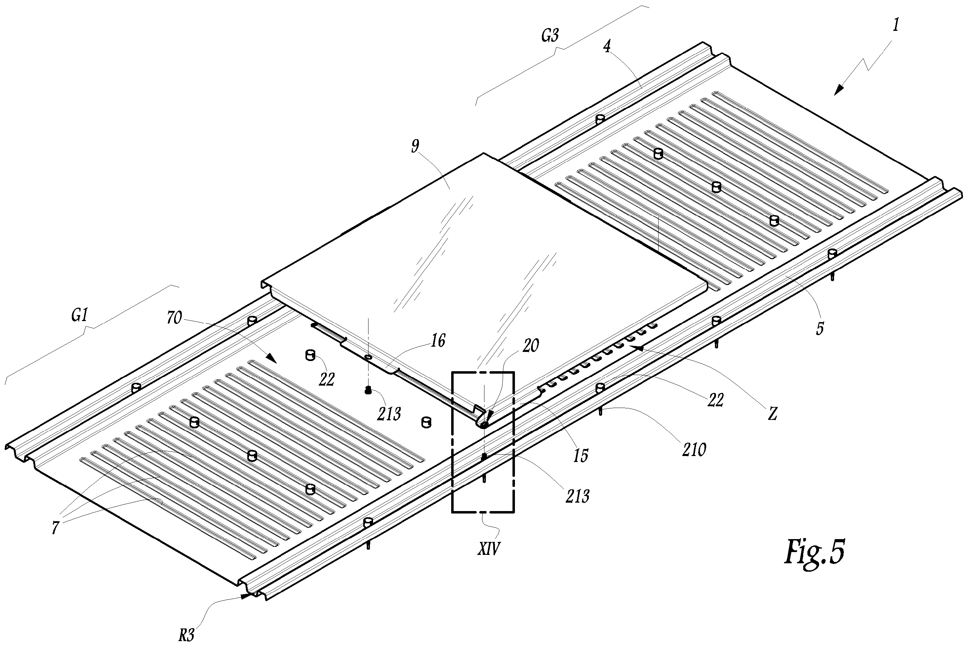

La figure 5 illustre le montage de la plaque accessoire 9, illustrée à la figure 3, sur une tôle 1 illustrée à la figure 1. Ici, la plaque 9 est dans une position où les pattes 15 et 16 sont visibles. La patte 15 est positionnée au dessus du relief R3 de la nervure 5 et la patte 16 au dessus du corps principal 6 de la tôle 1. Les orifices 20 des pattes 15 et 16 permettent le passage des têtes 214 de deux tiges 21 montées, pour l'une dans la nervure 5 et pour l'autre dans le corps 6. Les pattes permettent la fixation de la plaque 9 sur la tôle 1, au niveau des nervures latérales 4, 5 ainsi qu'au niveau des zones planes 70 situées entre les groupes G1 à G3 de reliefs 7.

Ainsi, dans ce mode de réalisation, la zone de réception Z de l'accessoire est délimitée entre, d'une part, les nervures 4, 5 et, d'autre part, deux zones planes 70 situées de part et d'autre d'un groupe G2 de reliefs 7.

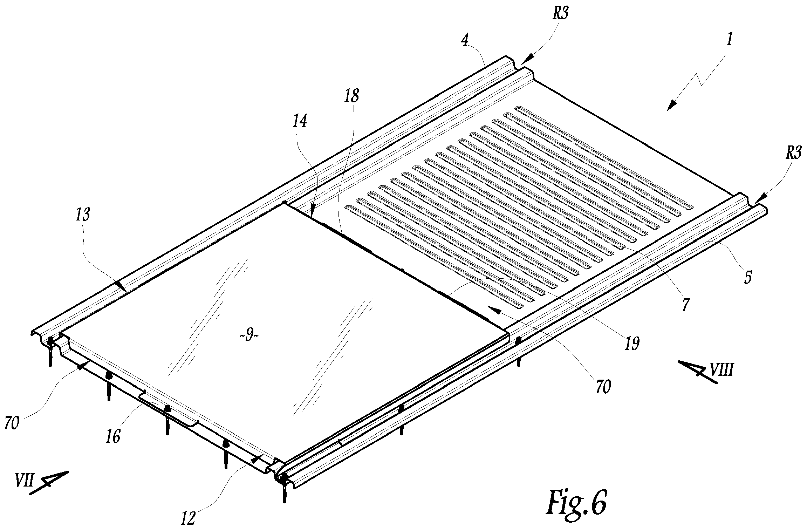

La figure 6 représente une plaque 9 une fois fixée, de manière amovible, sur la tôle 1. La fixation est similaire à celle d'un barreau 8 sur la tôle 1. Les pattes 15 à 19 sont positionnées de sorte que les orifices 20 de chaque patte reçoit une tête 213 d'une tige 21. Comme cela apparait plus clairement à la figure 14, les écrous 22 ont des dimensions telles que, lorsqu'ils sont en place sur les têtes 213, ils maintiennent en appui les pattes 15, 16 de la plaque 9 contre la tôle 1. Les lèvres 11 et 13 sont en appui, sur le fond des reliefs R3 des nervures 5 et 4. Les lèvres 12 et 14 sont en appui sur les zones planes 70, de part et d'autre d'un groupe de reliefs 7.

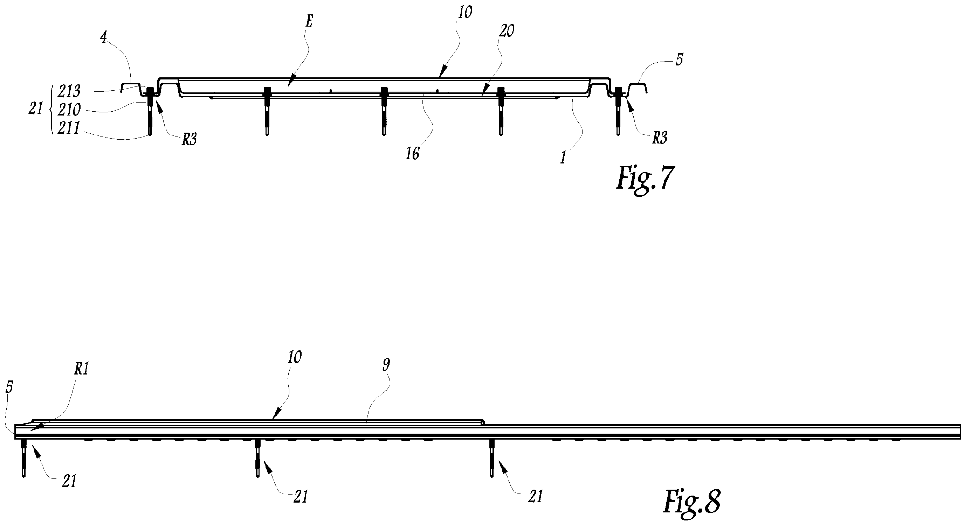

Les dimensions de la plaque 9, des nervures 4 et 5 et de la tôle 1 font que la surépaisseur due à la mise en place de la plaque 9 est minimale, comme cela ressort des figures 7 et 8. Ainsi, tout en préservant globalement l'encombrement de la tôle 1, on ménage par la fixation de la plaque 9 sur la tôle 1 un espace E entre la plaque 9 et le corps 6 permettant, si besoin, la mise en place d'un isolant ou le passage de câbles et/ou de gaines.

L'aspect visuel de la tôle 1 est modifié, seule la face 10 de la plaque 9 étant visible. On comprend que plusieurs plaques 9 peuvent, au choix, être montées sur la tôle 1. Le comportement mécanique et la résistance de la tôle 1 ne sont pas ou peu affectés par le montage de la ou des plaques 9 dans la mesure où aucun perçage ou découpe ne doit être réalisé dans la tôle 1.

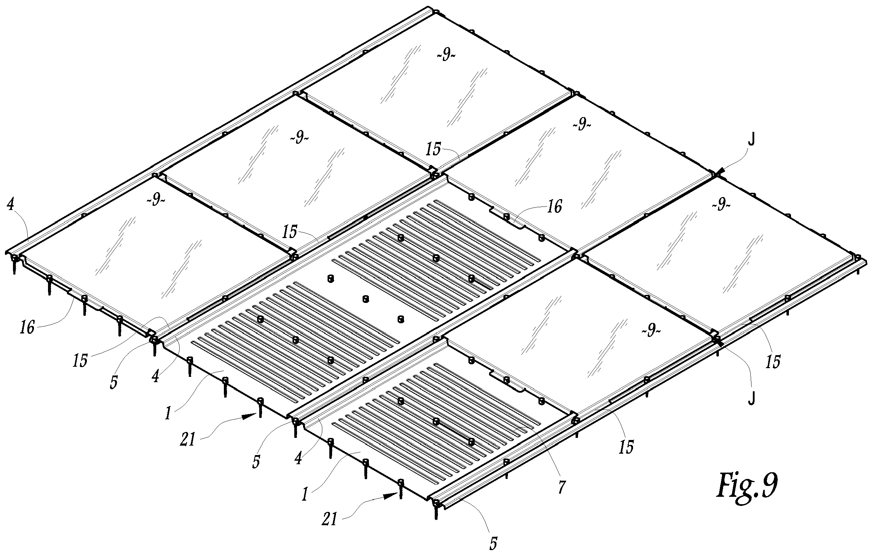

La figure 9 illustre trois tôles 1 assemblées par recouvrement partiel de leurs nervures 4 et 5 et destinées à couvrir une partie d'une structure, non représentée. Des plaques 9 sont fixées sur tout ou partie de chaque tôle 1. En l'espèce, la tôle 1 située à gauche en regardant la figure 9 est entièrement recouverte de plaques 9, la tôle 1 située à droite est pourvue, sur deux tiers de sa surface, de plaques 9 et la tôle 1 centrale n'est équipée que d'une plaque 9.

En fonction des besoins, on choisit le pourcentage de couverture des tôles 1 par les plaques 9 ainsi que la répartition de ces dernières sur les tôles 1. On note que les faces 10 des plaques 9 sont coplanaires mais non jointives. Un jour J, dont la largeur correspond sensiblement à la largeur des pattes 15 à 19, est ménagé entre deux plaques 9 adjacentes.

La disposition des pattes 15 à 19 sur les lèvres 11 à 14 permet, lorsque deux plaques 9 sont côte à côte, que leurs pattes 15 à 19 respectives s'intercalent et ne se chevauchent pas. On ménage ainsi une zone de juxtaposition entre deux plaques 9 rectiligne et homogène, sans surépaisseur, les pattes 15 à 19 des deux plaques s'intercalant pour être dans le prolongement les unes des autres selon une direction parallèle aux faces 10 de ces plaques.

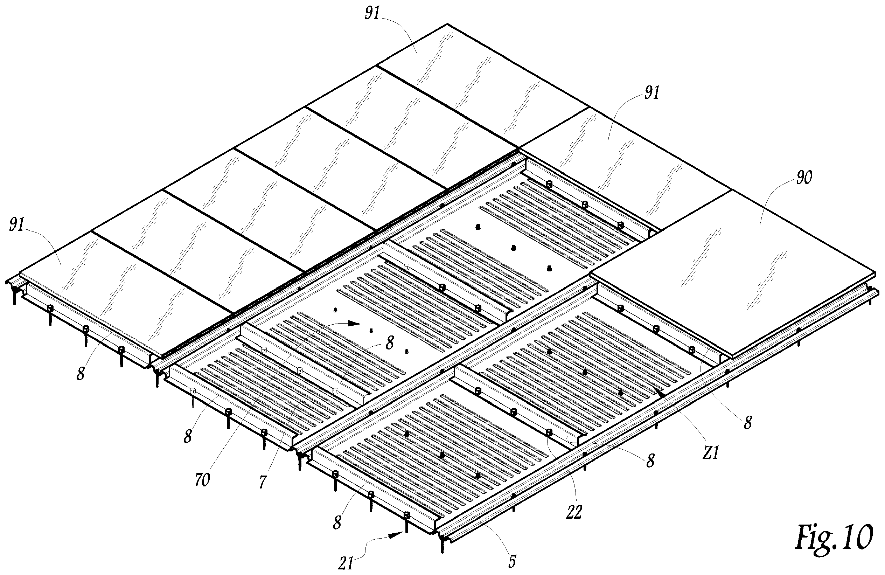

La figure 10 est obtenue par juxtaposition de trois tôles 1 selon la figure 4. La figure 10 illustre un autre mode de réalisation de l'invention dans lequel les accessoires comprennent des plaques de parement à vocation décorative 90 dépourvues de pattes et des plaques 91 rectangulaires, également dépourvues de pattes. Le montage des plaques 90, 91 sur trois tôles 1 assemblées par recouvrement partiel est effectué à l'aide de barreaux 8 à section en forme de Z. qui dans cet exemple ont un rôle utilitaire supplémentaire. Ces barreaux sont des écarteurs qui jouent un rôle de support ou d'adaptateurs de matières annexes et qui sont fixés sur la tôle comme les autres accessoires de l'invention. Les plaques 90, 91 sont reçues sur une zone Z1 de réception délimitée par deux barreaux 8 et les nervures 4, 5.

Ainsi, chaque plaque 90 ou 91 est fixée sur les barreaux 8 eux-mêmes fixés sur le corps 6, comme illustré à la figure 4. Une telle solution permet que les faces visibles des plaques 90 et 91 soient jointives.

La fixation des plaques 90, 91 se fait, par exemple, par vissage sur les accessoires 8. En variante, la fixation est réalisée par un système de clips ou, dans le cas d'une fixation définitive, par collage ou soudage. Dans une telle configuration, c'est l'ensemble accessoire 8 et plaques 90 ou 91 qui est amovible, pas une plaque 90, 91 seule.

Chaque plaque 9, 90, 91 est avantageusement montée, de manière amovible, tant au niveau des nervures 4, 5 que des accessoires 8.

Grâce à l'invention, il est possible de changer d'accessoire autant que de besoin, celui-ci pouvant être une plaque 9, 90, 91 colorée, porteuse d'un graphisme, de reliefs décoratifs ou d'une impression.

En variante, cet accessoire peut être une platine d'un projecteur, une platine de fixation d'une enceinte de type haut parleur, une platine de fixation d'un pot de fleurs ou d'une jardinière, une platine de fixation d'une lettre en relief ou d'autres accessoires pour autant que cet accessoire, ou au moins la partie de l'accessoire destinée à être fixée sur la tôle, a une forme compatible avec la configuration géométrique de la tôle 1 et, avantageusement, est pourvu d'orifices 20, ces derniers étant préférentiellement percés en usine.

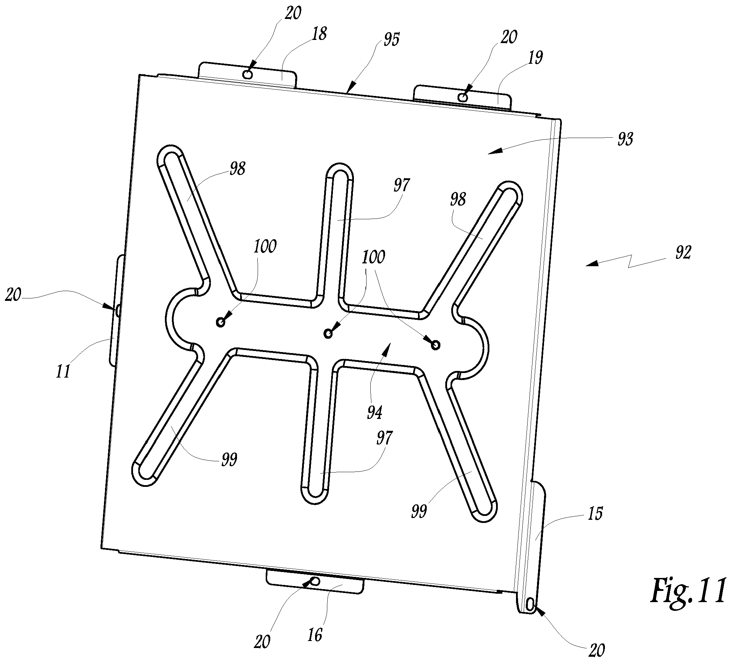

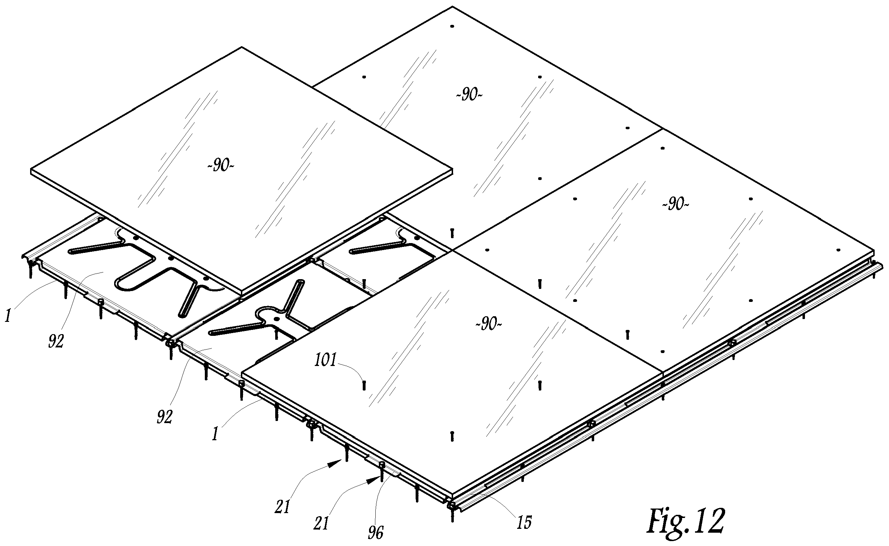

Dans un mode de réalisation représenté aux figures 11 et 12, un accessoire 92 est représenté avec une forme et des dimensions similaires à celles de la plaque 9. Cet accessoire se présente sous la forme d'une plaque 92, dénommée par la suite « cassette », et équipée, non seulement de moyens de fixation sur la tôle 1, à savoir des pattes 15 à 19, identiques à ceux de la plaque 9, mais également de moyens de fixation propres qui permettent de fixer, de manière amovible, un ou plusieurs élément(s) sur la plaque 92, par exemple un projecteur, une enceinte, un pot de fleurs, une jardinière, le lettre en relief, voire une plaque 90, 91. Ces moyens propres comprennent, sur une face 93 de la cassette 92 destinée à être visible, en absence d'élément lorsque la cassette support 92 est montée sur la tôle 1, une série de lamages.

En particulier, la plaque 92 comprend un lamage central 94 ménagé parallèlement à deux côtés parallèles 95, 96 de la plaque 92. De part et d'autre de ce lamage central 94, s'étendent d'autres lamages, soit perpendiculaires aux lamages 94, comme les lamages 97, soit inclinés comme les lamages 98, 99. L'ensemble des lamages 94, 97, 98, 99 a ainsi une configuration en arbre ou en étoile. Des perçages 100 sont ménagés dans le lamage central 94. En variante, d'autres perçages sont ménagés sur les autres lamages 97, 98, 99. Chaque lamage est adapté, par sa forme et/ou ses dimensions pour recevoir un autre accessoire à fixer, de manière amovible, sur la cassette 92.

Une telle cassette 92 est destinée, une fois en place sur la tôle, à former un support de fixation, amovible, pour d'autres accessoires, tout en étant elle-même amovible, cela sans altérer l'étanchéité de la fixation entre la tôle 1 et la structure ni compromettre l'intégrité physique et la résistance mécanique de la tôle 1.

La figure 12 illustre ainsi la mise en place de plaques 90 sur les cassettes 92, ces dernières étant montées sur des tôles 1 assemblées. Dans ce cas, la fixation des plaques 90 est réalisée par des moyens connus, par exemple à l'aide de vis 101. En effet, le montage des plaques 90 s'effectuant sur les cassettes 92, sans contact avec la tôle 1, de manière similaire au montage d'accessoires à l'aide des barreaux de support 8, les différents moyens connus de fixation sont aisément applicables.

Ainsi, dans tous les modes de réalisation décrits précédemment, de manière avantageuse et afin de limiter la création de perçages dans la tôle 1, l'attache de fixation définitive de la tôle 1 sur la structure et le moyen de fixation amovible de l'accessoire sur la tôle sont portés par un seul et même organe, la tige 21, dont la tête 213 est pourvue d'un moyen de fixation amovible de l'accessoire. Il s'agit, par exemple comme illustré aux différentes figures, d'un filetage.

En variante non illustrée, la tête de la tige 21 est pourvue d'un taraudage, d'un dispositif de clipsage, d'un dispositif à baïonnettes, de bandes auto agrippantes ou autres dispositifs permettant le montage d'un accessoire sur la tête de la tige, étant entendu que l'écrou 22 est adapté à la configuration de la tête.

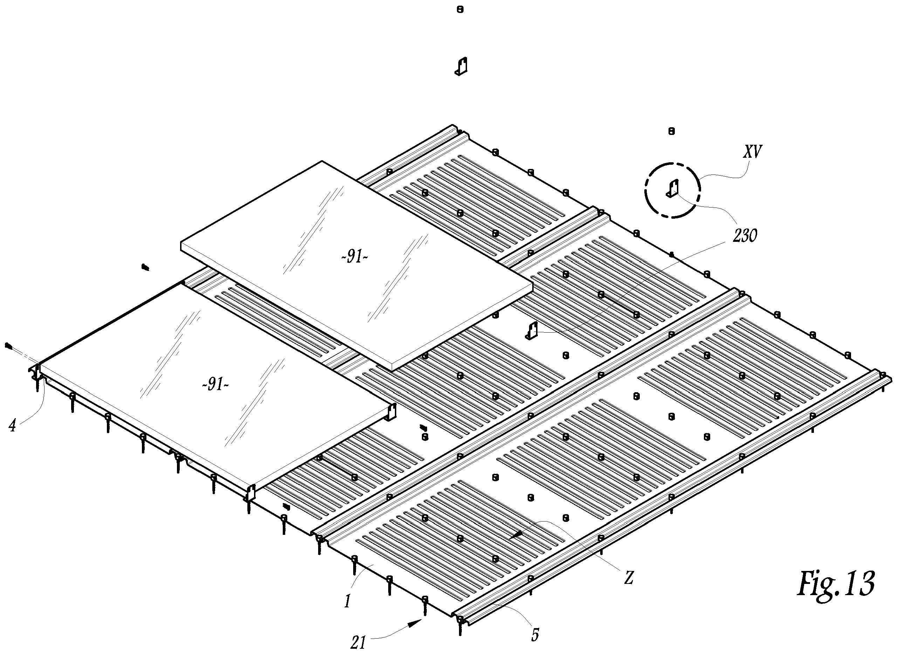

La figure 13 illustre un autre mode de réalisation de l'invention dans lequel les moyens de fixation d'un accessoire sur la tôle comprennent, en plus de la tête 213 des attaches 21, un organe intermédiaire. En variante non représentée, plusieurs organes intermédiaires peuvent être prévus.

Ce mode de réalisation est illustré par la fixation de plaques rectangulaires 91 sur des tôles 1 assemblées, étant entendu qu'il concerne également la fixation de plaques carrées 90 ou d'autres accessoires, pour autant que ces derniers sont dépourvus de pattes 15 à 19.

La fixation des plaques 91 sur les tôles 1 est effectuée par des pattes 230 telles qu'illustrées à la figure 15. Ces pattes 230 sont configurées en L. Une branche 231 de chaque patte 230 est en appui sur le corps 6, au niveau des zones 70. Cette branche 231 est pourvue d'un orifice propre à permettre l'insertion de la tête 213 d'une des tiges 21. La branche 231 est maintenue, de manière amovible, sur la tôle 1 par l'écrou 22, de façon similaire au maintien d'un accessoire 9 ou d'un organe de support 8.

L'autre branche 232 de la patte 230 s'étend à l'opposé de la tôle 1 par rapport à la branche 231, perpendiculairement au corps 6, vers le haut en regardant la figure 13. Cette branche 232 est adaptée pour former un support de fixation à une lèvre 110 d'une plaque 91. La lèvre 110 est fixée sur la branche 232 par des moyens connus, par exemple par des vis ou rivets.

En variante, la fixation peut être définitive, par exemple par soudage ou collage. Dans ce cas, le retrait de la plaque 91 implique la séparation de la patte 230 de la tôle 1. En d'autres termes, la patte 230 est alors partie intégrante de l'accessoire à fixer.

Dans le mode de réalisation de la figure 13, on réalise un montage jointif des plaques 91, comme dans le mode de réalisation illustré à la figure 10 mais en intercalant un organe intermédiaire entre la tige 21 et l'accessoire 91, à savoir la patte 230.

## Revendications

1. Dispositif de revêtement d'au moins une structure dans un bâtiment ou construction analogue, comprenant :
- au moins une tôle (1 ; 1'), notamment une tôle de bardage, qui est adaptée pour revêtir au moins un secteur dans une face de cette structure, et qui présente une face interne, tournée vers ladite face de la structure, et une face externe, opposée à la face interne,
- au moins un accessoire (9 ; 90 ; 91 ; 92) qui est adapté pour être rapporté sur une zone de réception (Z, Z1), ménagée sur la face externe de la tôle, qui est configuré en forme de plaque ou cassette, carrée (9 ; 90 ; 92) ou rectangulaire (91), et qui est adapté pour former, lorsqu'il est monté sur la tôle (1 ; 1'), un élément décoratif en soi ou bien un support de fixation pour d'autres éléments accessoires, décoratifs ou utilitaires, et
- des moyens de fixation (21, 22 ; 21, 22, 8 ; 21, 22, 230) adaptés pour fixer définitivement la tôle (1 ; 1') sur la structure et pour fixer de manière amovible l'accessoire (9 ; 90 ; 91 ; 92) sur la zone de réception (Z, Z1), lesquels moyens de fixation comprennent :
(i) des attaches (21) qui sont adaptées pour être insérées à travers la tôle, chacune des attaches étant formée par une tige incluant en un seul organe :
- un secteur d'accrochage (210) adapté pour être fixé définitivement dans la structure à travers la tôle,
- un élément d'appui (212), qui présente une face de serrage adaptée pour être appuyée sur la face externe de la tôle pour appliquer la face interne de la tôle contre la structure lorsque le secteur d'accrochage est fixé dans la structure à travers la tôle, de manière à fixer la tôle sur la structure de manière permanente et étanche, et
- une tête (213), qui est séparée du secteur d'accrochage par l'élément d'appui et qui est adaptée pour être fixée de manière amovible à l'accessoire (9 ; 90 ; 91 ; 92), de manière à autoriser le montage et le démontage de l'accessoire sur la zone de réception alors que la tôle est déjà fixée sur la structure par le secteur d'accrochage, sans affecter, d'une part, l'intégrité structurelle de la tôle et, d'autre part, l'intégrité et l'étanchéité de la fixation de la tôle sur la structure par le secteur d'accrochage et l'élément d'appui, et
(ii) un moyen de maintien (22) adapté pour maintenir, sur la tige des attaches (21), l'accessoire (9 ; 90 ; 91 ; 92) ou bien un organe intermédiaire (8 ; 230) des moyens de fixation, fixé à l'accessoire (9 ; 90 ; 91 ; 92), ce moyen de maintien (22) coopérant de manière amovible avec la tête (213) de la tige des attaches (21) pour serrer l'accessoire (9 ; 90 ; 91 ; 92) ou l'organe intermédiaire (8 ; 230), en direction de la tôle (1 ; 1'), contre l'élément d'appui (212) de la tige des attaches (21).

2. Dispositif selon la revendication 1, **caractérisé en ce que** la zone de réception (Z, Z1) et les moyens de fixation (21, 22 ; 21, 22, 8 ; 21, 22, 230) sont agencés pour permettre le montage d'une pluralité d'accessoires (9 ; 90 ; 91 ; 92) dans la face de la structure revêtue, conformément à un motif visuel prédéterminé.

3. Dispositif selon l'une des revendications précédentes, **caractérisé en ce que** la tôle (1 ; 1') comprend au moins une nervure longitudinale (4, 5 ; 4', 5') et ladite au moins une zone de réception comprend au moins une zone de réception (Z, Z1) parallèle à cette nervure.

4. Dispositif selon la revendication 1 ou 2, **caractérisé en ce que** la tôle (1 ; 1') comprend au moins deux nervures longitudinales parallèles (4, 5 ; 4', 5') et ladite au moins une zone de réception (Z1) comprend au moins une zone de réception transversale entre les deux nervures de la tôle.

5. Dispositif selon la revendication 4, **caractérisé par** plusieurs zones de réception transversales (Z ; Z1) propres à recevoir chacune un accessoire allongé transversalement entre les nervures.

6. Dispositif selon l'une quelconque des revendications précédentes, **caractérisé en ce que** le secteur d'accrochage (210) de la tige des attaches (21) est fileté.

7. Dispositif selon l'une quelconque des revendications précédentes, **caractérisé en ce que** l'élément d'appui (212) de la tige des attaches (21) forme une collerette (212).

8. Dispositif selon les revendications 7 et 8, **caractérisé en ce que** la tige des attaches (21) est pourvue d'un joint d'étanchéité, prévu sous la collerette (212) et autour du secteur d'accrochage (210).

9. Dispositif suivant l'une quelconque des revendications précédentes, **caractérisé en ce que** la tête (213) de la tige des attaches (21) est filetée et le moyen de maintien est un écrou (22) vissé sur la tête.

10. Dispositif selon la revendication 9, **caractérisé en ce que** l'écrou (22) est borgne et forme un capot de protection pour la tête (213) de la tige des attaches (21).

11. Dispositif selon l'une des revendications 9 ou 10, **caractérisé en ce que** l'écrou (22) est pourvu d'encoches ou de rainures de manoeuvre (220) pour visser l'écrou sur la tête (213) de la tige des attaches (21).

12. Dispositif selon l'une quelconque des revendications précédentes, **caractérisé en ce que** la tête (213) de la tige des attaches (21) comporte un moyen (214) de manoeuvre de la tige pour fixer le secteur d'accrochage (21) dans la structure au montage de la tôle (1 ; 1') sur la structure.

13. Dispositif selon l'une des revendications précédentes, **caractérisé en ce que** l'organe intermédiaire est une patte coudée (230) ou un barreau (8), propre à supporter l'accessoire (9 ; 90 ; 91 ; 92).

14. Structure de bâtiment, revêtue d'un dispositif selon l'une des revendications précédentes, **caractérisée par** une pluralité d'accessoires (9 ; 90 ; 91 ; 92) montés dans la ou plusieurs des zones de réception (Z, Z1) du dispositif en formant un ou des motifs visuels choisis ou déterminés en fonction d'un design préétabli.

## Patentansprüche

1. Vorrichtung zur Abdeckung mindestens einer Struktur in einem Gebäude oder einer vergleichbaren Konstruktion, umfassend:
- mindestens ein Blech (1; 1'), insbesondere ein Fassadenverkleidungsblech, das eingerichtet ist, um mindestens einen Bereich in einer Fläche dieser Struktur abzudecken, und das eine Innenfläche, die der Fläche der Struktur zugewandt ist, und eine Außenfläche, die der Innenfläche gegenüberliegt, aufweist,
- mindestens ein Zubehörteil (9; 90; 91; 92), das eingerichtet ist, um auf einem Aufnahmebereich (Z, Z1) angebracht zu werden, der an der Außenfläche des Blechs ausgebildet ist, und das in Form einer Platte oder einer Kassette, quadratisch (9; 90; 92) oder rechteckig (91) ausgebildet ist, und das eingerichtet ist, um, wenn es an dem Blech montiert (1; 1') ist, ein an sich dekoratives Element oder auch eine Befestigungshalterung für weitere zusätzliche, dekorative oder nützliche Elemente zu bilden, und
- Befestigungsmittel (21, 22; 21, 22, 8; 21, 22, 230), die eingerichtet sind, um das Blech (1 ; 1') dauerhaft auf der Struktur zu befestigen und um das Zubehörteil (9; 90; 91; 92) lösbar auf dem Aufnahmebereich (Z, Z1) zu befestigen, wobei die Befestigungsmittel umfassen:
(i) Verbindungselemente (21), die eingerichtet sind, um durch das Blech hindurch eingeführt zu werden, wobei jedes der Verbindungselemente von einer Stange gebildet ist, die einstückig aufweist:
- einen Verankerungsbereich (210), der eingerichtet ist, um durch das Blech hindurch dauerhaft in der Struktur befestigt zu werden,
- ein Stützelement (212), das eine Klemmfläche aufweist, die eingerichtet ist, um auf die Außenfläche des Blechs gestützt zu werden, um die Innenfläche des Blechs gegen die Struktur anzulegen, wenn der Verankerungsbereich durch das Blech hindurch in der Struktur befestigt ist, so dass das Blech auf dauerhafte und abdichtende Weise an der Struktur befestigt wird, und
- einen Kopf (213), der von dem Verankerungsbereich durch das Stützelement getrennt ist und der eingerichtet ist, um lösbar an dem Zubehörteil (9; 90; 91; 92) befestigt zu werden, um die Montage und die Demontage des Zubehörteils auf der Aufnahmezone zu gewährleisten, während das Blech durch den Verankerungsbereich bereits an der Struktur befestigt ist, ohne einerseits die strukturelle Beschaffenheit des Blechs und andererseits die Beschaffenheit und die Dichtigkeit der Befestigung des Blechs an der Struktur durch den Verankerungsbereich und das Stützelement zu beeinträchtigen, und
(ii) ein Haltemittel (22), das eingerichtet ist, um auf der Stange der Verbindungselemente (21) das Zubehörteil (9; 90; 91; 92) oder auch ein Zwischenstück (8; 230) der Befestigungsmittel, das an dem Zubehörteil (9; 90; 91; 92) befestigt ist, zu halten, wobei dieses Haltemittel (22) auf lösbare Weise mit dem Kopf (213) der Stange der Verbindungselemente (21) zusammenwirkt, um das Zubehörteil (9; 90; 91; 92) oder das Zwischenstück (8; 230), in Richtung des Blechs (1; 1'), gegen das Stützelement (212) der Stange der Verbindungselemente (21) zu klemmen.

2. Vorrichtung nach Anspruch 1, **dadurch gekennzeichnet, dass** der Aufnahmebereich (Z, Z1) und die Befestigungsmittel (21, 22; 21, 22, 8; 21, 22, 230) ausgebildet sind, um die Montage einer Mehrzahl von Zubehörteilen (9; 90; 91; 92) an der Fläche der abgedeckten Struktur gemäß einem vorbestimmten optischen Muster zu gewährleisten.

3. Vorrichtung nach einem der vorhergehenden Ansprüche, **dadurch gekennzeichnet, dass** das Blech (1; 1') mindestens eine Längsrippe(4, 5; 4', 5') umfasst und der mindestens eine Aufnahmebereich mindestens einen zu dieser Rippe parallelen Aufnahmebereich (Z, Z1) umfasst.

4. Vorrichtung nach Anspruch 1 oder 2, **dadurch gekennzeichnet, dass** das Blech (1; 1') mindestens zwei parallele Längsrippen (4, 5; 4', 5') umfasst und der mindestens eine Aufnahmebereich (Z1) mindestens einen querverlaufenden Aufnahmebereich zwischen den zwei Rippen des Blechs umfasst.

5. Vorrichtung nach Anspruch 4, **gekennzeichnet durch** mehrere querverlaufende Aufnahmebereiche (Z; Z1), die jeweils geeignet sind, ein langgestrecktes Zubehörteil querverlaufend zwischen den Rippen aufzunehmen.

6. Vorrichtung nach einem der vorhergehenden Ansprüche, **dadurch gekennzeichnet, dass** der Verankerungsbereich (210) der Stange der Verbindungselemente (21) ein Gewinde aufweist.

7. Vorrichtung nach einem der vorhergehenden Ansprüche, **dadurch gekennzeichnet, dass** das Stützelement (212) der Stange der Verbindungselemente (21) einen Kragen (212) bildet.

8. Vorrichtung nach Anspruch 7 und 8, **dadurch gekennzeichnet, dass** die Stange der Verbindungselemente (21) mit einem Dichtungselement versehen ist, das unter dem Kragen (212) und um den Verankerungsbereich (210) herum vorgesehen ist.

9. Vorrichtung nach einem der vorhergehenden Ansprüche, **dadurch gekennzeichnet, dass** der Kopf (213) der Stange der Verbindungselemente (21) ein Gewinde aufweist und das Haltemittel eine Mutter (22) ist, die auf den Kopf geschraubt ist.

10. Vorrichtung nach Anspruch 9, **dadurch gekennzeichnet, dass** die Mutter (22) eine Hutmutter ist und eine Schutzkappe für den Kopf (213) der Stange der Verbindungselemente (21) bildet.

11. Vorrichtung nach einem der Ansprüche 9 oder 10, **dadurch gekennzeichnet, dass** die Mutter (22) mit Betätigungskerben oder -rillen (220) versehen ist, um die Mutter auf den Kopf (213) der Stange der Verbindungselemente (21) zu schrauben.

12. Vorrichtung nach einem der vorhergehenden Ansprüche, **dadurch gekennzeichnet, dass** der Kopf (213) der Stange der Verbindungselemente (21) ein Mittel (214) zum Betätigen der Stange aufweist, um bei der Montage des Blechs (1; 1') auf der Struktur den Verankerungsbereich (210) in der Struktur zu befestigen.

13. Vorrichtung nach einem der vorhergehenden Ansprüche, **dadurch gekennzeichnet, dass** das Zwischenstück ein Haltewinkel (230) oder ein Stab (8) ist, der geeignet ist, das Zubehörteil (9; 90; 91; 92) zu stützen

14. Gebäudestruktur, abgedeckt mit einer Vorrichtung nach einem der vorhergehenden Ansprüche, **gekennzeichnet durch** eine Vielzahl von Zubehörteilen (9; 90; 91; 92), die in dem oder mehreren Aufnahmebereichen (Z, Z1) der Vorrichtung montiert sind, wobei sie ein oder mehrere optische Muster bilden, die in Abhängigkeit von einem vorab erstellten Design gewählt oder bestimmt werden.

## Claims

1. Device for covering at least one structure in a building or analogous construction, comprising:
- at least one sheet (1; 1'), especially a cladding sheet, which is adapted to cover at least one section in a face of the structure and which has an inside face, facing said face of the structure, and an outside face, opposite the inside face,
- at least one accessory (9; 90; 91; 92) which is adapted to be fitted to a receiving zone (Z, Z1) formed on the outside face of the sheet, which is configured in the form of a plate or cassette, square (9; 90; 92) or rectangular (91), and which is adapted to form, when it is mounted on the sheet (1; 1'), a decorative element in itself or a fixing support for other decorative or utilitarian accessory elements, and
- fixing means (21, 22; 21, 22, 8; 21, 22, 230) adapted to fix the sheet (1; 1') permanently to the structure and to fix the accessory (9; 90; 91; 92) removably to the receiving zone (Z, Z1), which fixing means comprise:
(i) fasteners (21) which are adapted to be inserted through the sheet, each of the fasteners being formed by a rod including in a single member:
- an attachment section (210) adapted to be fixed permanently in the structure through the sheet,
- a supporting element (212) which has a clamping face adapted to be pressed against the outside face of the sheet in order to apply the inside face of the sheet against the structure when the attachment section is fixed in the structure through the sheet, so as to fix the sheet to the structure permanently and tightly, and
- a head (213) which is separated from the attachment section by the supporting element and which is adapted to be removably fixed to the accessory (9; 90; 91; 92) so as to allow the accessory to be mounted on and dismounted from the receiving zone when the sheet is already fixed to the structure by the attachment section, without affecting on the one hand the structural integrity of the sheet and on the other hand the integrity and tightness of the fixing of the sheet to the structure by the attachment section and the supporting element, and
(ii) a holding means (22) adapted to hold, on the rod of the fasteners (21), the accessory (9; 90; 91; 92) or an intermediate member (8; 230) of the fixing means, fixed to the accessory (9; 90; 91; 92), the holding means (22) cooperating in a removable manner with the head (213) of the rod of the fasteners (21) in order to clamp the accessory (9; 90; 91; 92) or the intermediate member (8; 230), in the direction of the sheet (1; 1'), against the supporting element (212) of the rod of the fasteners (21).

2. Device according to claim 1, **characterised in that** the receiving zone (Z, Z1) and the fixing means (21, 22; 21, 22, 8; 21, 22, 230) are arranged to allow a plurality of accessories (9; 90; 91; 92) to be mounted in the face of the covered structure, in accordance with a predetermined visual pattern.

3. Device according to any one of the preceding claims, **characterised in that** the sheet (1; 1') comprises at least one longitudinal rib (4, 5; 4', 5') and said at least one receiving zone includes at least one receiving zone (Z, Z1) parallel to the rib.

4. Device according to claim 1 or 2, **characterised in that** the sheet (1; 1') comprises at least two parallel longitudinal ribs (4, 5; 4', 5') and said at least one receiving zone (Z1) includes at least one transverse receiving zone between the two ribs of the sheet.

5. Device according to claim 4, **characterised by** a plurality of transverse receiving zones (Z; Z1) each capable of receiving an accessory extended transversely between the ribs.

6. Device according to any one of the preceding claims, **characterised in that** the attachment section (210) of the rod of the fasteners (21) is threaded.

7. Device according to any one of the preceding claims, **characterised in that** the supporting element (212) of the rod of the fasteners (21) forms a collar (212).

8. Device according to claims 7 and 8, **characterised in that** the rod of the fasteners (21) is provided with a seal, which is provided beneath the collar (212) and around the attachment section (210).

9. Device according to any one of the preceding claims, **characterised in that** the head (213) of the rod of the fasteners (21) is threaded and the holding means is a nut (22) screwed onto the head.

10. Device according to claim 9, **characterised in that** the nut (22) is blind and forms a protective cap for the head (213) of the rod of the fasteners (21).

11. Device according to either claim 9 or claim 10, **characterised in that** the nut (22) is provided with manoeuvring notches or grooves (220) for screwing the nut onto the head (213) of the rod of the fasteners (21).

12. Device according to any one of the preceding claims, **characterised in that** the head (213) of the rod of the fasteners (21) has a means (214) for manoeuvring the rod in order to fix the attachment section (21) in the structure upon mounting of the sheet (1; 1') on the structure.

13. Device according to any one of the preceding claims, **characterised in that** the intermediate member is a bent lug (230) or a bar (8) capable of supporting the accessory (9; 90; 91; 92).

14. Building structure covered with a device according to any one of the preceding claims, **characterised by** a plurality of accessories (9; 90; 91; 92) mounted in the receiving zone or a plurality of the receiving zones (Z, Z1) of the device to form (a) visual pattern(s) chosen or determined as a function of a pre-established design.
